# EUROPEAN PATENT APPLICATION

(11) **EP 4 167 419 A1**
(43) Date of publication of application: **19.04.2023**
(21) Application number: 22198671.4
(22) Date of filing: 29.09.2022
(51) Int. Cl.: H02J 3/00, H02J 13/00

(54) **SYSTEMS AND METHODS FOR AN ENERGY MONITORING AND TRANSFER**

(30) Priority: 14.10.2021 US 202117501562
(71) Applicant: Honeywell International Inc., Charlotte, NC 28202 (US)
(72) Inventor: ARUNACHALAM, Soundarai, Charlotte, 28202 (US); MURALEEDHARAN, Murajith, Charlotte, 28202 (US); SINGHVI, Shalu, Charlotte, 28202 (US); DEVARAJAN, Ashalatha, Charlotte, 28202 (US); PALLE, Suresh, Charlotte, 28202 (US); DART, Simon, Charlotte, 28202 (US)
(74) Representative: Houghton, Mark Phillip

(57) **Abstract**

Methods and systems for facilitating the trading of energy in a peer-to-peer manner and maintain a balanced supply of energy. The systems and methods may incorporate an electric meter coupled to an energy source and an energy load, along with an energy trading platform configured to establish a blockchain distributed ledger configured to record energy transaction between energy consumers and energy suppliers. The energy trading platform may receive notifications of available energy from energy suppliers, requests for energy from energy consumers, and a selection of an energy consumer to fulfill an energy request. In response to the selection, an energy transaction may be formed and executed via self-executing contract stored in the distributed ledger. In some cases, the systems and methods may incorporate a dynamic demand response system.

## Description

### TECHNICAL FIELD

This disclosure relates generally to power systems and more particularly to power meters and energy trading systems.

### BACKGROUND

Power systems are used to provide necessary power to a wide variety of systems such as, but not limited to, light systems, security systems, HVAC systems, computing systems, electric vehicles (EVs), EV charging stations, and general power requirements. In some cases, electric meters are used to measure power consumption for billing purposes. Improvements in the use and function of electric meters and energy trading systems is desired.

### SUMMARY

This disclosure is directed toward power systems and more particular to electric meters and energy trading systems. In one example, a peer-to-peer energy trading system is provided. The illustrative energy trading system includes an electric meter and an energy trading platform. The electric meter is operatively couplable to an energy source and an energy load. The electric meter may include a metrology unit for measuring a quantity of energy delivered from the energy source to the energy load, an energy controller for controlling energy delivery between the energy source and the energy load, and a blockchain client.

An illustrative energy trading platform is configured to receive notifications of available energy from one or more energy suppliers, receive requests for energy from one or more energy consumers, and receive a selection from a first energy consumer of one or more of the energy suppliers to fulfill a request for energy of the first energy consumer. The energy trading platform may be further configured to establish a blockchain distributed ledger and create a blockchain transaction in the blockchain distributed ledger between the first energy consumer and the one or more energy suppliers selected by the first energy consumer to fulfill the request for energy of the first energy consumer. The blockchain transaction may include a self-executing smart contract that identifies the first energy consumer, the one or more of the energy suppliers selected by the first energy consumer to fulfill the request for energy of the first energy consumer, and a price for the energy requested by the first energy consumer. The illustrative energy trading platform may further be configured to instruct the electric meter via the blockchain client of the electric meter to allow delivery of the energy requested by the first energy consumer to an energy load of the first energy consumer.

In another example, an electric meter may include a metrology unit, an energy quality unit, an energy controller (e.g. switch), a communication port, and a blockchain client. The metrology unit may measure a quantity of energy delivered from the energy source to the energy load, the energy quality unit may determine a measure of quality of energy delivered from the energy source to the energy load (e.g., delivered through a grid network), and the energy controller may control energy delivery between the energy source and the energy load (e.g., where the energy delivery is through a grid network). The communication port may be configured to interface with a mobile device for receiving one or more energy sale parameters from a user. The blockchain client may be configured to communicate with a remote blockchain distributed ledger. The blockchain client may report the measure of quality of energy delivered from the energy source to the energy load to the remote blockchain distributed ledger, report the one or more energy sale parameters to the remote blockchain distributed ledger, and receive instructions from the remote blockchain distributed ledger to control the energy controller.

In another example, an energy trading platform may be configured to establish a blockchain distributed ledger. The energy trading platform may further be configured to: receive notifications of available energy from one or more energy suppliers; receive requests for energy from one or more energy consumers; receive a selection from a first energy consumer of one or more of the energy suppliers to fulfill a request for energy of the first energy consumer; create a blockchain transaction in the blockchain distributed ledger between the first energy consumer and the one or more of the energy suppliers selected by the first energy consumer to fulfill the request for energy of the first energy consumer, the blockchain transaction including a self-executing smart contract that identifies the first energy consumer, the one or more of the energy suppliers selected by the first energy consumer to fulfill the request for energy of the first energy consumer, and a price for the energy requested by the first energy consumer; and instruct an electric meter via a blockchain client of the electric meter to allow delivery of the energy requested by the first energy consumer to an energy load of the first energy consumer.

The preceding summary is provided to facilitate an understanding of some of the features of the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following detailed description of various embodiments in connection with the accompanying drawings, in which:
Figure 1 is a schematic diagram of an illustrative energy trading system;
Figure 2 is a schematic diagram of an illustrative computing device;
Figure 3 is a schematic diagram of an illustrative electric meter;
Figure 4 is a schematic diagram of an illustrative energy trading platform;
Figure 5 is a schematic diagram of an illustrative energy trading system;
Figure 6 is a schematic diagram of an illustrative blockchain distributed ledger;
Figure 7 is a schematic flow diagram of an illustrative method of implementing a dynamic demand response system; and
Figure 8 is a schematic flow diagram of an illustrative method of using an energy trading platform.

While the disclosure is amenable to various modifications and alternative forms, specifics thereof have been shown by way of example in the drawings and will be described in detail. It should be understood, however, that the intention is not to limit aspects of the disclosure to the particular embodiments described. On the contrary, the intention is to cover all modifications, equivalents, and alternatives falling within the spirit and scope of the disclosure.

The following detailed description should be read with reference to the drawings in which similar elements in different drawings are numbered the same. The description and the drawings, which are not necessarily to scale, depict illustrative embodiments and are not intended to limit the scope of the disclosure. The illustrative embodiments depicted are intended only as exemplary. Selected features of any illustrative embodiment may be incorporated into an additional embodiment unless clearly stated to the contrary.

The global electric vehicle (EV) market is growing at a rapid rate. For example, by some calculations, the global EV market is growing at about a 23% compound annual growth rate (CAGR).

The charging infrastructure for EVs has not maintained pace with the EV market. By some estimates, only about 20% of charging ports are located in public places with long-term parking opportunities. Such a lack of sufficient charging infrastructure can cause "range anxiety" for EV owners. Additionally, the increase in the EV market has created stability and other issues for energy utilities. For example, unexpected EV charging surges during peak hours or at other times may cause electric grid imbalances, such as power outages, power quality issues, etc.

In view of the increase in the EV market, as well as for other reasons, it is desirable to develop solutions for improving the charging infrastructure and grid infrastructure that interacts with charging stations. In one example, charging infrastructure may be improved by increasing the availability of charging ports at locations with long-term parking. In another example, grid infrastructure may be improved by creating systems that improve grid balancing by facilitating the upload of excess power at electricity meters (e.g., from a user's renewable energy source, from a user's EV, etc.) to the grid or to a local EV charging station (e.g., at a neighbor's house).

Peer-to-peer energy trading systems that have an electric meter and an energy trading platform may be useful in facilitate improved EV charging infrastructure and grid infrastructure and/or operation. Such trading systems may include an electric meter and an energy trading platform.

In some cases, the electric meter may be couplable to an energy source (e.g., the grid, a user's renewable energy source, a user's energy storage unit, EV, etc.) and an energy load (e.g., a user's EV, a user's energy storage unit, a local load, etc.) In some cases, the electric meter may include a metrology unit, an energy controller, and a blockchain client, where the metrology unit may measure a quantity of energy delivered from the energy source to the energy load and the energy controller (e.g. energy switch) may be configured to control when energy is delivered and how much energy is delivered between the energy source and the energy load. In some cases, the electric controller may facilitate bidirectional movement of energy between an energy source and an energy consumer.

The energy trading platform may be located in the cloud or at a third party, which may be separate from a user and a utility, but this is not required. In some cases, the energy platform may be configured to establish a blockchain distributed ledger. When so configured, the energy platform may receive notifications of available energy from one or more energy suppliers, receive requests for energy from one or more energy consumers, receive a selection from an energy consumer of an energy supplier to fulfill a request for energy, and create a blockchain transaction in the blockchain distributed ledger between the energy consumer and the selected energy supplier. Although other transaction configurations are contemplated, the blockchain transaction may include a self-executing smart contract that identifies the energy consumer, the selected energy supplier, a price for the energy requested by the energy consumer, a load to which the energy is to be provided, etc.

Once the blockchain transaction has been created, the energy trading platform may instruct the electric meter to allow delivery of the energy from the energy supplier to an energy load of the energy consumer. An energy smart meter (e.g., ESM) may validate power quality once the blockchain transaction is approved and may allow the power to integrate to the grid if it meets power quality requirements. Although not required, the load of the energy consumer to which the requested energy is to go may be specified in the self-executing contract to facilitate delivery of the energy to the load. The load, in some cases, may be an EV but this is not required. It is contemplated that the load may be any suitable energy load.

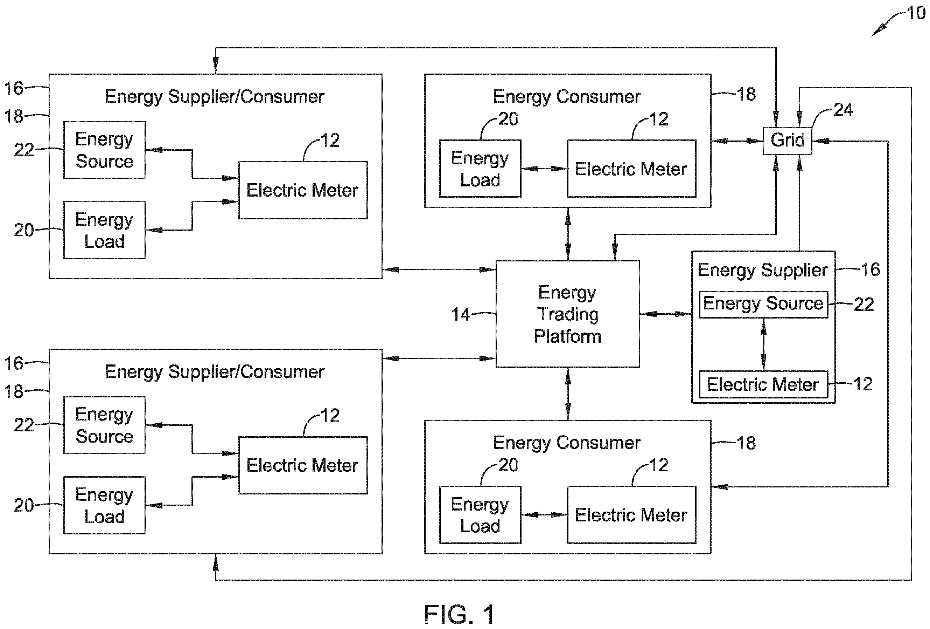

Turning to the Figures, Figure 1 is schematic block diagram of an illustrative energy transfer or energy trading system 10. In some cases, the energy trading system 10 may be a peer-to-peer energy trading system, but this is not required. Generally, a peer-to-peer system may be a decentralized system of computing devices that communicate with each other over one or more networks without intermediation by a third party, other than the peer-to-peer service.

The energy trading system 10 may include one or more electric meters 12 (e.g., power meters) and an energy trading platform 14, among other suitable components. As depicted in Figure 1, the energy trading system 10 may include a centralized energy trading platform 14 in communication with a plurality of electric meters 12 located at one or more energy consumers 16 having an energy load 20 and/or energy suppliers 18 having an energy source 22. When a user of the energy trading system 10 includes an energy load 20 and an energy source 22, the user may be an energy consumer 16 and an energy supplier 18. For example, an EV may be an energy load when the EV is charged, but the EV may also be used as an energy supplier and provide energy to the grid.

Energy consumers 16 may be users of the energy trading system 10 that have one or more energy loads 20 configured to receive electricity from a grid 24 and/or the energy suppliers. Energy loads 20 may be any suitable component or system that consumes energy. Example energy loads 20 include, but are not limited to, light systems, security systems, HVAC systems, electric vehicles (EVs), EV charging stations, batteries, and/or other suitable energy consuming components and systems. In one example, an energy consumer 16 may be a user having an EV charging station and an EV, both of which may be considered energy loads 20 and may receive energy (e.g., electricity) via the energy trading platform 14.

Energy suppliers 18 may be users of the energy trading system 10 that have one or more energy sources 22 and provide electricity to the grid 24 and/or one or more of the energy consumers 16. Energy sources 22 may be any suitable component or system that is configured to produce energy to be consumed. Example energy sources 22 include, but are not limited to, utilities, renewable energy systems, solar panels, wind turbines, batteries and/or other suitable energy supplying components and systems. In some cases, EV charging stations may be considered an energy source when providing energy to an EV, and EVs may be considered an energy source when delivery power to the grid or other energy load 20. In one particular example, an energy supplier 18 may be a user that includes one or more of a renewable energy source and/or an energy storage system (e.g., a battery of an EV, a high capacity battery, etc.), where energy (e.g., electricity) from the renewable energy source and/or energy storage system may be provide to the grid or energy load 20 of another user. In another example, an energy supplier 18 may be a utility having an energy source 22 (e.g. power plant, solar, wind) providing electricity to the grid 24.

The electric meter 12 may be any suitable electric meter 12 configured to measure, monitor, and/or control electricity or power between energy loads 20 and energy sources 22 and communicate with the energy trading platform 14. The electric meter 12 may be configured to determine a quantity and quality of the electricity being delivered between the energy sources 22 and the energy loads. In one example, the electric meter 12 may be configured to measure a current and/or voltage being transferred between energy suppliers 18 and energy consumers 16 and provide the measurements to the energy trading platform 14.

In some cases, the electric meter 12 may be considered a direct electric meter (e.g., a direct current electric meter), meaning that the electric meter 12 is connected between the energy loads 20 and the energy sources 22 for DC input sources. In some cases, the electric meter 12 may be considered an AC (Alternate current) electric meter which is connected between the energy loads 20 and the energy sources 22 for AC input sources. Many of the features discussed herein may be equally applicable to direct current electric meters and to alternating current electric meters. In some cases, the electric meter 12 may provide a measure of electricity in each of the three phases in a three-phase electrical line.

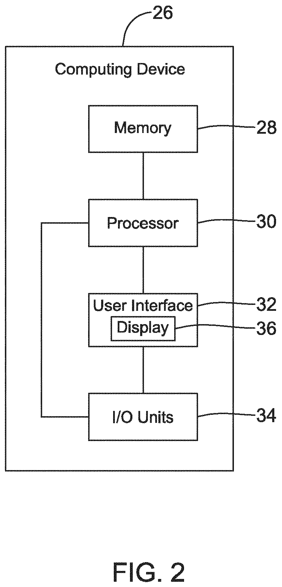

The electric meter 12, the energy trading platform 14, the energy consumer 16, the energy supplier 18, the energy load 20, the energy source 22, the grid 24, and/or other suitable components of the energy trading system 10 may be, may include, and/or may be controlled by a computing device. An example computing device 26 is depicted in Figure 2.

The computing device 26 may represent all or part of one or more of the energy trading platform 14, the energy consumer 16, the energy supplier 18, the energy load 20, the energy source 22, the grid 24, and/or other suitable components of the energy trading system 10. Although not shown, the computing device 26 may include a clock and/or a timer. The computing device 26 may be and/or may be part of, for instance, a smart phone, a tablet, a personal digital assistant (PDA), an EV, an EV charging station, a battery, a personal computer, a motor, a network device, a light source, a controller, a sensor, a switch, a remote server, a network device, a router and/or other suitable computing device. However, configurations of the present disclosure are not limited to a particular type of computing device 26. In some cases, the computing device 26 may include memory 28, one or more processors 30, one or more user interfaces 32, one or more input/output (I/O) units 34, and/or one or more other suitable computing components.

The memory 28 may be any type of storage medium that can be accessed by the processor 30 to perform various examples of the present disclosure. For example, the memory 28 may be a non-transitory computer readable medium having computer readable instructions (e.g., computer or application program instructions, application program code of a mobile application or software, control algorithm software, and/or other suitable instructions) stored thereon that are executable by the processor 30 for performing one or more methods described herein.

The memory 28 may be volatile or nonvolatile memory. The memory 28 may also be removable (e.g., portable) memory, or non-removable (e.g., internal) memory. For example, the memory 28 may be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although the memory 28 is illustrated as being located in the computing device 26, embodiments of the present disclosure are not so limited. For example, the memory 28 may also be located internal to another computing resource (e.g., enabling computer readable instructions to be downloaded over the Internet or another wired or wireless connection).

The processor 30 of the computing device 26 may include a single processor or more than one processor working individually or with one another (e.g., dual-core, etc.). The processor 30 may be configured to execute instructions, including instructions that may be loaded into the memory 28 and/or other suitable memory. Example processor components may include, but are not limited to, microprocessors, microcontrollers, multi-core processors, central processing units, graphical processing units, digital signal processors, application specific integrated circuits (ASICs), field programmable gate arrays (FPGAs), discrete circuitry, and/or other suitable types of data processing devices.

The user interface 32, when provided, may be any suitable user interface and/or user interface components configured to facilitate a user of the computing device 26 interacting with the computing device 26 via the user interface 32. For example, the user interface 32 may be used to provide information to and receive information from the user of the computing device 26. For instance, the user interface 32 may display volume data, flow rate data, and/or other suitable data related to a flow through a gas line and/or receive selections of settings for sensing and/or monitoring a flow through the gas line. The user interface 32 may include a keyboard or keyboard functionality, a pointer (e.g., a mouse, touch pad, or touch ball) or pointer functionality, a microphone, a speaker, a light system, a haptic system, a camera, a video camera, selectable buttons, adjustable dials, and/or other suitable user interface features the user may use to input information into and/or receive information from the computing device 26. Configurations of the present disclosure, however, are not limited to a particular type(s) of user interface 32.

In some cases, the user interface 32 may include a graphical user interface (GUI) that may have a display 36 (e.g., a screen) that may provide and/or receive information to and/or from the user of the computing device 26. The display 36 may be, for instance, a touch-screen (e.g., the GUI may include touch-screen capabilities). In some cases, the user interface may be part of another device (e.g. cell phone) that is in wireless communication with the computing device 26.

The I/O unit 34 may be and/or include any type of communication port(s) and may facilitate wired and/or wireless communication with one or more networks. In one example, the I/O unit 34 may facilitate communication with one or more networks and/or other devices through any suitable connection including, but not limited to, radio communication, Ethernet, cellular communication, ZigBee, REDLINK^{™}, Bluetooth, Bluetooth Low Energy (BLE), WiFi, LORA, IrDA, dedicated short range communication (DSRC), EnOcean, Near Field Communication (NFC), and/or any other suitable common or proprietary wired or wireless protocol. In one example, the I/O unit 34 may at least include a port configured to communicate over a network with one or more components of or in communication with the energy trading system 10.

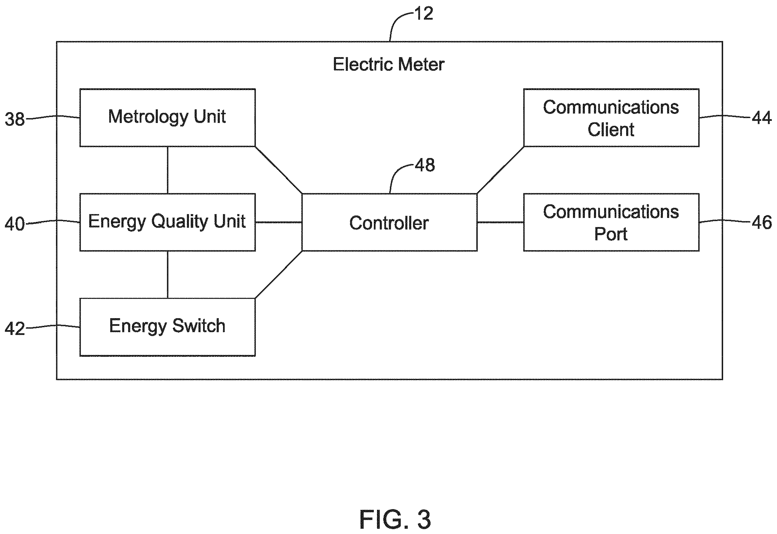

Figure 3 is a schematic box diagram of an illustrative electric meter 12. Among other components, the electric meter 12 may include a metrology unit 38, an energy quality unit 40, an energy controller (e.g. energy switch 42), a communications client 44, a communications port 46, and a controller 48.

The electric meter 12 may have a draw mode, a feed mode, or both of a draw mode and a feed mode. For example, when a user is an energy consumer 16 and an energy supplier 18, the user's electric meter 12 may have a draw mode and a feed mode. When in the draw mode, the electric meter 12 may deliver energy from an energy source to a local energy load. When in the feed mode, the electric meter 12 may deliver a feed energy from a local energy source up to a grid or other energy source of the energy trading system 10. In some cases, the energy trading platform 14 may instruct the electric meter 12 (e.g., via a transaction manager of the energy trading platform 14 and/or a blockchain client or other suitable communications client of the electric meter 12, discussed in greater detail below) to switch between the draw mode and the feed mode.

The metrology unit 38 may be any suitable unit configured to measure a quantity of energy delivered from an energy source 22 to an energy load 20. In some cases, the metrology unit 38 may include or be in communication with one or more terminals that are coupled to a current provided to the energy load 20. Further, the metrology unit 38 may be in communication with or coupled to the energy quality unit 40 and the controller 48, among other components.

The energy quality unit 40 may be configured to sense and/or otherwise determine (e.g., derive) one or more measures of the quality of energy received from the energy source 22 or provided to the energy load 20. Example measures of the quality of energy that is sensed or determined by the energy quality unit 40 include, but are not limited to, measures of sag, swell, interruptions, spikes, notches, oscillations, harmonics, flicker, other suitable measured, and/or combinations thereof. In some cases, the energy quality unit 40 is separate from the metrology unit 38 and in other cases, the energy quality unit 40 and the metrology unit 38 may be at least partially integrated with one another. Further, the energy quality unit 40 may be in communication with the controller 48, among other components.

In operation, the energy quality unit 40 may be configured to compare a sensed or determined measure of energy quality to a desired level of quality. If the energy quality fails to meet the desired level of quality, the energy quality unit 40 may communicate with the energy source/supplier via wired/wireless communication which includes, but not limited to, PLC communication, which can control energy switch 42 and cause the electricity being delivered to the energy load 20 to be disrupted (e.g., interrupted and/or prevented from reaching the energy load 20). If the energy quality is determined to meet the desired level of quality, the energy quality unit 40 may communicate with the energy source/supplier over wired/wireless communication, which includes, but not limited to, PLC communication to control energy switch 42 to maintain delivery of the electricity to the energy load 20.

The energy switch 42 may be any suitable type of switch that facilitates turning on or off a flow of electricity between the energy load 20 and the energy source 22. That is, the energy switch 42 may be configured to control energy delivery between the energy source 22 and the energy load 20. Example energy switch types include, but are not limited to latching relay. In some cases, the energy switch 42 functions to connect/disconnect the energy source 22 with/from the energy load 20 under certain conditions, such as during installation and/or when a fault condition is detected.

The communications client 44 may be any suitable communication client configured to facilitate secure communication between the electric meter 12 and the energy trading platform 14 and/or with other users of the energy trading system 10. The communications client 44 may be in communication with the communications port 46 and the controller 48 of the electric meter 12. In some cases, the communications client 44 may be or may include a blockchain client, private/public key communication protocol, a DR agent and/or other suitable communication clients. In one example operation of the communications client 44, the communications client 44 may receive measures of quality of energy delivered from the energy source 22 to the energy load 20, encrypt the measures of quality of energy, and cause the encrypted measures of quality of energy to be delivered to or reported to a distributed ledger (e.g., a blockchain distributed ledger) of the energy trading platform 14. Further, the communications client 44 may be configured to report energy transaction (e.g., sale) parameters to the distributed ledger and received instruction from the distributed ledger to control the energy switch 42.

The communications port 46 may be any suitable communications port configured to facilitate communication between the electric meter 12 and the energy trading platform 14 over wired and/or wireless connections via one or communication protocols. Example communication protocols include, but are not limited to, Ethernet, Bluetooth Low Energy (BLE), Zigbee, WiFi, LORA, RF, and/or other suitable wireless or wired protocols.

The controller 48 may be any suitable controller configured to facilitate operation of the electric meter 12. In some cases, as shown in Figure 3, the controller 48 may be separate from the other components of the electric meter 12, but this is not required. Instead, the controller 48 may be fully or partially incorporated into one or more of the metrology unit 38, the energy quality unit 40, the energy switch 42, the communications client 44, the communications port 46, and/or other component of the electric meter 12.

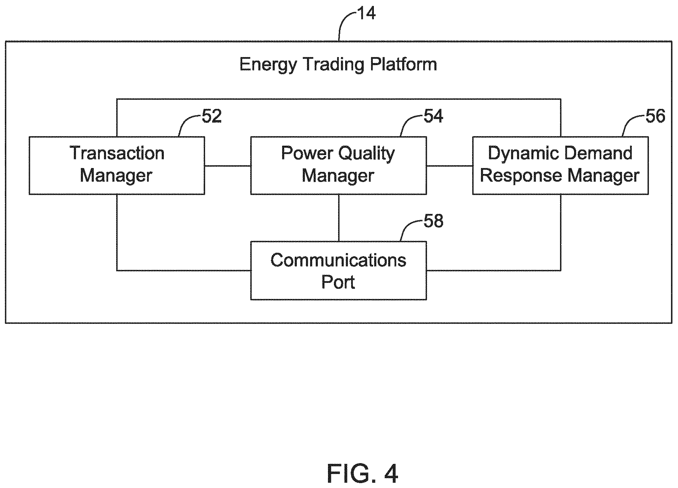

Figure 4 is a schematic box diagram of the illustrative energy trading platform 14. Among other components, the energy trading platform 14 may include a transaction manager 52, a power quality manager 54, a dynamic demand response (DDR) manager 56, and a communications port 58.

The communications port 58 of the energy trading platform 14 may be any suitable communications port, as discussed herein or otherwise, that is configured to facilitate communication between users (e.g., energy suppliers 18, energy consumers 16, utilities, etc.), the electric meters 12, and/or the energy trading platform 14 over wired and/or wireless connections via one or more communication protocols. In one example, the communications port 58 of the energy trading platform 14 may facilitate communication between the transaction manager 52, an energy supplier 18, and an energy consumer 16. In another example, the communications port 58 of the energy trading platform 14 may facilitate communication between the dynamic demand response manager 56 and an electric meter at an energy consumer 16. Example communication protocols include, but are not limited to, Ethernet, Bluetooth Low Energy (BLE), Zigbee, WiFi, LORA, RF, and/or other suitable wireless or wired protocols.

The transaction manager 52 may be configured to manage transactions between energy suppliers 18 and energy consumers 16. Among other abilities, the transaction manager 52 may be configured to store data related to energy suppliers 18, the energy consumers 16, and other components of the energy trading system 10. Example data may include, but is not limited to, financial institution information, location information, history information, user rating information, profile information, energy source information, energy load information, energy transaction or trade information, utility information, regulatory information (e.g., tariff information, tax information, etc.), device or component type information, quantity of energy available, quality of energy available, an amount of energy available, times at which energy is available, and/or other suitable information related to the energy trading system 10. Although not required, the transaction manager 52 may be able to securely store such information related to the energy trading system 10 using a decentralized network (e.g., a blockchain network or other suitable decentralized network) or other suitably secure system. Further, the transaction manager 52 may be configured to ensure government regulations, such as tariffs and other regulations, are implemented and followed.

The power quality manager 54 may be in communication with the transaction manager 52 and the communications port 58, and may be configured to monitor a quality of energy provided to the grid 24 or an energy load 20 and/or a quality of energy obtained from the grid 24 or an energy source. In some cases, the power quality manager 54 may be in communication with one or more energy quality units 40, but this is not required. Such monitoring may facilitate ensuring energy transferred using the energy trading system 10 maintains a desired quality and energy provided in view of an energy transaction meets energy quality terms set in the transaction. Example energy quality metrics or measures of quality may include, but are not limited to, measures of sag, well, interruptions, spikes, notches, oscillations, harmonics, flicker, and/or other suitable measures of energy quality.

In one example operation of the power quality manager 54, the power quality manager 54 may sense or receive a measure of quality of energy provided to an energy load 20 and provide the measure of quality of energy to the transaction manager 52 for assessing whether energy provided has a quality level that meets a quality level set in a transaction between an energy consumer 16 and an energy supplier 18. Alternatively, or additionally, the transaction manager 52 may provide the quality level set in the transaction to the power quality manager 54 and the power quality manager may determine if the sensed or measured power quality meets the set quality level.

The dynamic demand response (DDR) manager 56 may be in communication with the transaction manager 52, the power quality manager 54, and the communications port 58, and may be configured to monitor energy in or on the energy trading system 10 and output signals to energy meters that are configure to adjust operation of the energy loads 20 and/or energy sources 22 to facilitate balancing energy supply and demand. Example DDR systems are discussed in US Patent No. 8,782,190, filed on February 2, 2011, and titled DEMAND RESPONSE MANAGEMENT SYSTEM, which is hereby incorporated by references in its entirety for any and all purposes, and US Patent No. 9,137,050, filed on November 18, 2011, and titled DEMAND RESPONSE SYSMTE INCORPORATING A GRAPHICAL PROCESSING UNIT, which is hereby incorporated by reference in its entirety for any and all purposes.

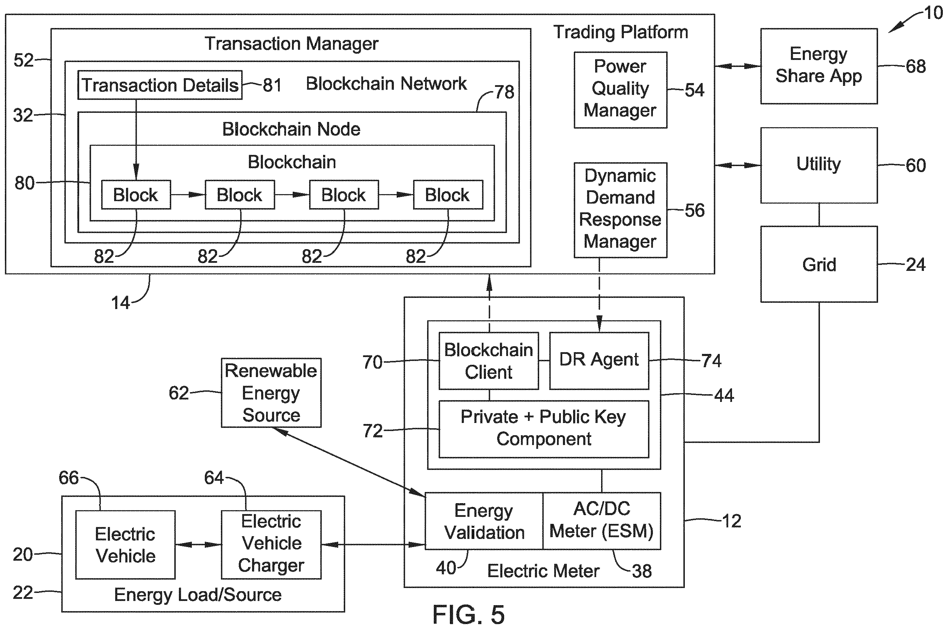

Figure 5 is a schematic diagram of an illustrative configuration of the energy trading system 10, incorporating the energy trading platform 14 in communication with a user's electric meter 12 and a utility 60 (e.g., the utility 60 may be an energy consumer 16 and/or an energy supplier 18). In some cases, the utility 60 and the electric meter 12 may be in communication with the grid 24.

The electric meter 12 may be in communication with the user's energy loads 20 and/or energy sources 22. In the example of Figure 5, the electric meter 12 may be in communication with a renewable energy source 62 (e.g., wind powered turbine, solar panels, etc.), an EV charger 64, and an EV 66, but the electric meter 12 may be in communication with other energy loads 20 and/or energy sources 22. In some cases, the electric meter 12 may be configured to facilitate transferring energy between the user's energy loads 20 and energy sources 22, the grid 24, and/or other users' energy loads 20 and energy sources 22 in response to transactions recorded at the energy trading platform 14 and/or signals from the DDR manager 56.

Transactions between users of the energy trading platform 14 (e.g., energy consumers 16 and energy suppliers 18) may be initiated with or through the energy trading platform 14 in any suitable manner. In one example, users may utilize an energy share application 68 that may be accessed via a computing device (e.g., a mobile device and/or other suitable computing device). Via the energy share application 68, users may be able to view energy loads 20 in need of energy, energy supplies that can be purchased, times when energy loads 20 need energy, times when energy may be available from energy suppliers 18, available EV chargers for use, and/or other suitable information related to energy trading. Additionally, or alternatively, users may be able to create transactions in a peer-to-peer (P2P) manner, via the energy share application and/or the energy trading platform 14, with other users (e.g., energy consumers 16, energy suppliers 18, utilities 60, etc.) that have registered or signed on with the energy trading platform 14, such that the transactions may be securely recorded and implemented via the energy trading platform 14.

Although not required, the energy share application 68 may include different views for energy consumers 16 and energy suppliers 18. In some cases, the view for the energy consumer 16 may be integrated with an infotainment dashboard for its energy loads (e.g., EV, battery, etc.) In some cases, the view for the energy supplier 18 may be integrated with an infotainment dashboard for its energy sources (e.g., EV charging station, renewable energy sources, battery, etc.).

The different views may be provided via different energy share applications 68 for an energy consumer account and an energy supplier account. Alternatively, or additionally, the different views may be available as different pages or sections on a single energy share application 68. Further, the different views may be available based on whether a user has an energy consumer account with the energy trading platform 14, an energy supplier account with the energy trading platform 14, or both of an energy consumer account and an energy supplier account, but this is not required.

To facilitate implementing transactions between users of the energy trading platform 14, the communications client 44 of the electric meter 12 may be configured to facilitate communication between the electric meter 12 and the energy trading platform 14. In some cases, the communications client 44 may include one or more secure communication components such as a blockchain client 70, a private and public key component 72 (or other suitable component for facilitating secure communications), and/or other suitable components to facilitate secure communication of transaction information and implementation signals between the energy trading platform 14 and the electric meter 12. Further, the communications client 44 may include a demand response (DR) agent 74 which may be configured to communicate with the DDR manager 56, provide energy usage information for the user to the DDR manager 56, and receive signals from the DRR manager 56 to cause the electric meter 12 to modify and/or override the user's energy behavior (e.g., energy usage or energy production to the grid 24 or other electrical network) in response to supply and demand needs of the energy trading platform 14 in real time (e.g., to ensure supply and demand are balanced on the grid 24 and/or other electrical networks).

In some cases, the DR agent 74 may be configured to communicate DR signals or results of signals to the blockchain client 70, such that the blockchain client 70 may communicate with the transaction manager 52 to adjust parameters of one or more transactions between the energy consumers 16 and the energy suppliers 18. In one example, the DR agent 74 may receive a DR signal from the DDR manager 56 instructing the electric meter 12, the energy loads 20, and/or the energy sources 22 to modify behavior at a particular time and duration for the purpose of reducing energy demand on and/or increasing energy supply to the grid 24. In the example, the DR agent 74 may provide this information or related information concerning a need to reduce load or increase energy supply at the specified time and duration, and the blockchain client 70 may provide this information to the transaction manager 52. In response, the transaction manager 52 may cancel or delay any energy transactions set to occur during the specified time and duration and update the energy share application 68 to reflect availability of energy in view of the DR signal. If the transaction manager 52 determines a delay of a transaction is a desired response to the DR signal, the transaction manager 52 may delay transfers of energy that are set to occur during the specified time and duration in the DR signal, along with some or all subsequent transactions.

Transaction manager 52 may make a determination as to whether a transfer of energy should be delayed or canceled based on parameters of transactions between the energy consumers 16 and the energy suppliers 18, information in or associated with the DR signal, and/or other suitable factors. In one example, if a duration specified in the DR signal has reached or is greater than a threshold amount of time, the transaction manager 52 may determine it is necessary to cancel one or more transactions set to cause an energy transfer during the time and duration specified in the DR signal and if a duration specified in the DR signal has not reached the threshold amount of time, the transaction manager 52 may delay all of the transfers of energy set to occur during the time and duration specified in the DR signal.

Although the transaction manager 52 is described as making determinations in response to receiving DR signal information from the blockchain client 70, the transaction manager 52 may receive DR signal information from the DDR manager 56 and/or other suitable sources. Further, although the transaction manager 52 is described as making determinations in response to receiving DR signal information, the determinations and/or other determinations may be made by the blockchain client 70 and/or other suitable portions of or at the electric meter 12 in view of received DR signal information.

The private and public key component 72 may be used to facilitate secure communication between the energy trading platform 14 and the electric meter 12. For example, the blockchain client 70 may utilize the private and public key component 72 to communicate with the transaction manager 52 and/or the DR agent 74 may use the private and public key component 72 to communicate with the DDR manager 56. In one example, the blockchain client 70 may be configured to communicate with the transaction manager 52, where the transaction manager 52 is associated with a private blockchain network, and the private and public key component 72 may be utilized by the blockchain client 70 to facilitate communicate with the transaction manager 52 and accessing the private blockchain network.

As depicted in Figure 5, the transaction manager 52 may include or be associated with a blockchain network 76. The blockchain network may be configured to securely store energy consumer information, energy supplier information, transaction information, and/or the information related to the energy trading system 10. Utilizing a blockchain network as described herein may allow users to trust the energy trading system 10 and/or other users of the energy trading system 10 as the blockchain network may provide secure storage of information along with facilitating automatic execution of agreed-upon transactions. Illustrative features of blockchain technology are found in U.S. Patent Application Serial Number 15/970,418, filed on May 3, 2018, and titled APPARATUS AND METHOD FOR USING BLOCKCHAINS TO ESTABLISH TRUST BETWEEN NODES IN INDUSTRIAL CONTROL SYSTEMS OR OTHER SYSTEMS, which is hereby incorporated by reference in its entirety for any and all purposes, and U.S. Patent Application Serial Number 16/568,753 filed on September 12, 2019, and titled SYSTEMS AND METHODS OF VERIFYING INSTALLATION OF BUILDING AUTOMATION DEVICES, which is hereby incorporated by reference int its entirety for any and all purposes. Although a blockchain network 76 is depicted and described as being the secure network of the energy trading platform 14, it is contemplated that other secure networks may be utilized to store information.

The blockchain network 76 may be any suitable blockchain network having blockchain nodes, blockchain, blocks, etc. In one example, the blockchain network 76 may be made up of a plurality of blockchain nodes 78 and a blockchain 80 (e.g., a distributed ledger distributed to a plurality of the blockchain nodes 78) having one or more blocks 82. In some cases, the blockchain 80 may include transaction details 81 configured to allow the blockchain network 76 to at least partially ensure transactions between the energy consumer 16 and the energy supplier 18 are implemented according to the terms of the transaction. The transaction details 81 may be stored within a block 82 of the blockchain 80 and/or may be part of a smart contract formed via a virtual machine (e.g., Ethereum Virtual Machine (EVM) and/or other suitable virtual machine) and/or formed in one or more other suitable manners.

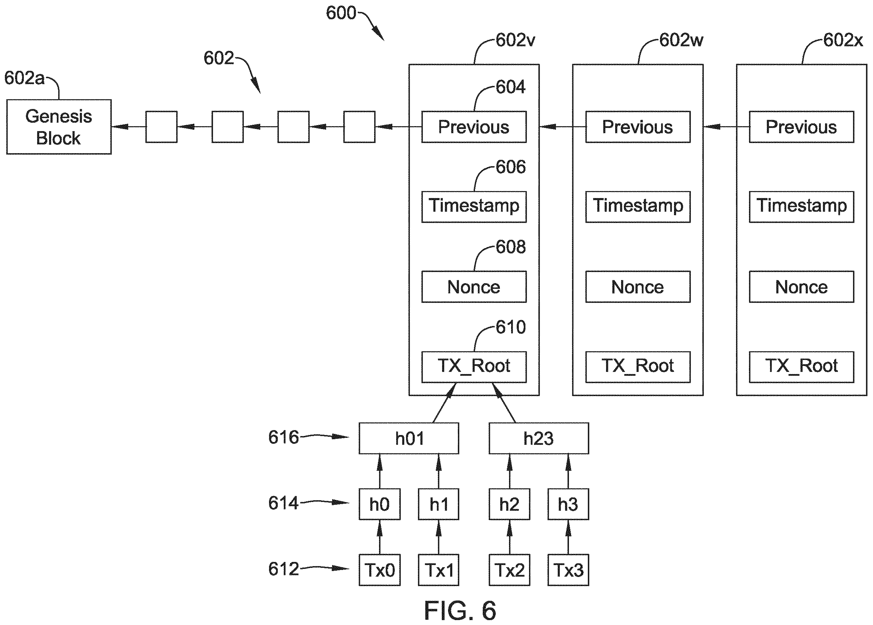

Figure 6 illustrates an example blockchain 600 (e.g., an example distributed ledger) used to secure data and help ensure the integrity of the transactions and energy data on the energy trading system 10. As shown in Figure 6, the blockchain 600 may include a sequence of blocks from 602a to 602v, 602w, and 602x (which are referred to generally as blocks 602). Each block 602 may function as a record associated with a specific transaction and, in some cases, each block 602 may be considered a transaction token. One or more of the blocks 602 may include or may be associated with one or more smart contracts that define allowable communications between nodes of the blockchain network and/or interactions with the blockchain network. Except for the first block 602a in the blockchain 600, each block 602 may include a previous hash value 604, which may represent a cryptographic hash from the previous block 602 in the blockchain 600. Each block 602 of the blockchain 600 may include a timestamp 606, which identifies the date and time that the associated block 602 was created and a cryptographic signature (e.g., the cryptographic hash and/or other suitable cryptographic signature).

Each block 602 may further include a nonce value 608, which may represent a value that is added to the block 602 by a device or entity (e.g., the energy consumer 16, the energy supplier 18, the utility 60, the electric meter 12, the energy trading platform 14, etc.) that created the block 602. The nonce value 608 may provide proof to other devices that the device that created the block 602 performed certain cryptographic operations in order to generate a valid block 602, where the other devices can easily verify the validity of the block 602 using the nonce value 608.

Each block 602 may include transaction data, which may include a transaction root hash value 610, but the transaction root hash value is not necessarily required. The transaction root hash value 610 in each block 602 may represent a hash value generated by the device that created that block 602 based on transaction information. In one example, the transaction root hash value 610 in each block 602 may be generated by taking data 612 associated with one or more transactions (e.g., smart contract data, user data, user location data, device location data, and/or other suitable data) and applying one or more hashing functions using the data 612. This may generate one or more hash values 614. Assuming there are multiple hash values 614, one or more additional hashing functions (such as pairwise hashing functions) may be applied to the hash values 614 in order to generate one or more additional hash values 616. An additional hashing function may then be applied to the hash values 616 and other contents of the block 602 in order to generate the root hash value 610. Note that this represents one example of how the transaction root hash value 610 may be generated and other examples are contemplated. In general, the root hash value 610 may be generated in any suitable manner, and often the root hash value 110 represents a cryptographic hash of most or all of the block 602. In some cases, the root hash value may be considered a cryptographic signature include with the block 602.

In one aspect of operation, multiple copies of the blockchain 600 may be stored and maintained by multiple host nodes (e.g., where a host node may be a node of a blockchain network containing the distributed ledger (e.g., the blockchain)). In some cases, all nodes of the blockchain network may be host nodes, but this is not required and instead, some number of nodes less than all of the nodes in the blockchain network may be host nodes. The blockchain 600 therefore may function as a distributed ledger that can be used by multiple devices to obtain or verify information contained in the blocks 602 of the blockchain 600.

Devices (e.g., nodes) may "mine" the blockchain 600 to identify blocks 602 containing desired information, such as one or more blocks 602 containing a smart contract involving two or more specific nodes or entities involved with the blockchain network. Devices may also generate new transaction data (such as new smart contracts), and cryptographic operations may be performed using the transaction data to create and add new blocks 602 to the blockchain 600. Thus, new blocks 602 may be appended to the blockchain 600 at different host nodes as new transactions occur, and these blocks 602 may be propagated to other host nodes so that the blockchain 600 can be updated at those nodes. Each new block 602 may be linked to a previous block 602 in the blockchain 600 as described above, which may help prevent someone from illicitly changing data in earlier blocks 602 of the blockchain 600. Approval of a threshold amount of the nodes of the blockchain network may be required before each new block 602 is added to the blockchain 600, before mined information is deemed valid, before a user is authorized, and/or before, a user request is granted.

A threshold amount of nodes may be all nodes or some number fewer than all nodes. For example, the threshold amount of nodes may be one hundred percent (100%) of nodes, ninety-five percent (95%) of nodes, ninety percent (90%) of nodes, eight percent (80%) of nodes, seventy percent (70%) of nodes, sixty percent (60%), fifty percent (50%) of nodes, twenty-five percent (25%) of nodes, and/or other suitable percentage of nodes or number of nodes.

In the context of establishing trust between nodes for communications (e.g., approval of a user (e.g., the electric meter 12, the energy trading platform 14, the energy consumer 16, the energy supplier 18, the utility 60, etc.) to enter the blockchain network and/or approval of a request by a user), a blockchain 600 can be used to identify approved smart contracts involving various nodes of the blockchain network. When a node of the blockchain network attempts to initiate a communication session with another node of the blockchain network, the blockchain 600 may be used to determine whether a smart contract has already been approved for the initiating node. If so, at least one block 602 of the blockchain 600 may be identified as containing an appropriate smart contract, and the communication session may be allowed to proceed. If not, the node receiving the initiating request may generate a smart contract and request approval from one or more other nodes on the blockchain network, and one or more new blocks 602 may be added to the blockchain 600 (whether approved or rejected) that reflects the generated smart contract. Further, the blockchain6100 may be used by applications or other nodes in determining whether the initiating node is trusted, as well.

In this way, the blockchain 600 may provide a tamper-evident distributed ledger that can be used by multiple nodes. This may help establish trust between the various nodes in the blockchain network without relying on or in addition to thirdparty digital certificates or self-signed digital certificates. The use of blockchain technology also helps to provide data security and data authenticity. In addition, the use of blockchain technology allows for distributed availability of the data.

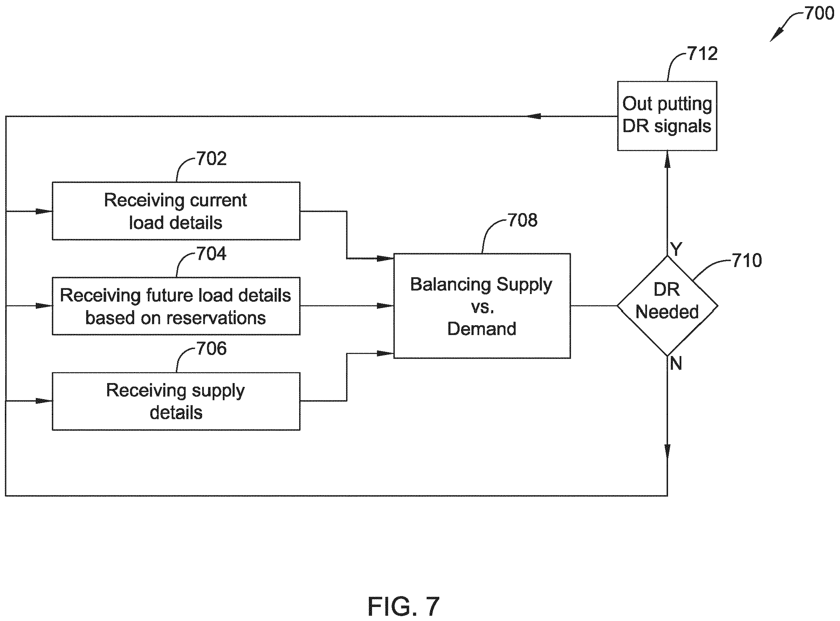

Figure 7 depicts an illustrative method 700 of determining when to output a DR signal using an energy trading system (e.g., the energy trading system 10 and/or other suitable energy trading system). As depicted in Figure 7, the method 700 may include receiving 702 current energy (e.g., electricity) load details on the energy trading system and/or an energy grid from a utility (e.g., the utility 60 and/or other suitable utility), electric meters (e.g., the electric meters 12 and/or other suitable electric meters), and/or other sources sources monitoring energy loads, receiving 704 future load details from a transaction manager (e.g., the transaction manager 52 and/or other suitable transaction manager) of an energy trading platform (e.g., the energy trading platform 14 and/or other suitable energy trading platform), receiving 706 energy supply details for the energy trading system from the a utility, electric meters, and/or other suitable sources monitoring energy production or a supply of energy. Illustrative details concerning current energy loads, future energy loads, and energy supply may include, but are not limited to, amounts of energy, timing of energy loads and/or supply, duration of energy loads and/or demand, a quality of energy, etc.

Once details of energy loads and energy supplies have been received, the energy supply and demands (e.g., current and future) may be compared or balanced 708 to ensure the demand and supply remain balanced over time (e.g., energy demand does not exceed energy supply by more than a desired amount, if at all, and/or energy supply does not exceed energy demand by more than a desired amount, if at all). If the energy supply and energy demand is balanced and is expected to remain balanced, no action is needed and the process may be repeated over time. If there is an imbalance or an expected imbalance, a DR signal may be outputted 712 to one or more electric meters (e.g., via the blockchain client 70 and the DR agent 74 and/or directly to the DR agent 74) to cause the electric meters to curtail energy usage/loads such that supply is not exceeded and/or to cause energy suppliers to increase energy production (e.g., by turning on windmills, turning on solar panels, etc.) such that energy demand is met.

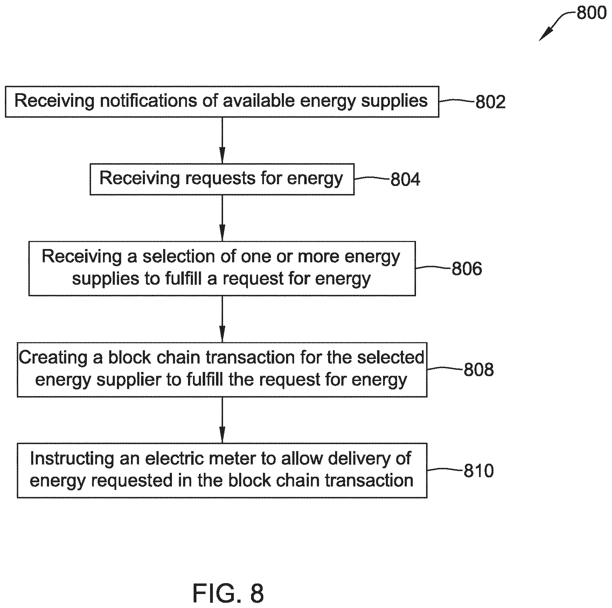

Figure 8 depicts an illustrative method 800 of creating a transaction in an energy trading system (e.g., the energy trading system 10 and/or other suitable energy trading system) via an energy trading platform (e.g., the energy trading platform 14 and/or other suitable energy trading platform. In some cases, the transaction may be created in or recorded in a blockchain distributed ledger, but this is not required.

In the method 800, notifications of available energy from one or more energy suppliers (e.g., the energy suppliers 18 and/or other suitable energy suppliers) may be received 802 and requests for energy from one or more energy consumers (e.g., the energy consumers 16 and/or other suitable energy consumers) may be received 804. The notifications and requests may be used to populate the energy trading platform with energy consumers and energy suppliers, associated energy requests and supplies, associated timing of energy requests and energy supplies, associated energy quality levels for requests and supplies, associated financial institution information, and/or other suitable information needed to create energy transactions between energy consumers and suppliers. Further, the notifications and requests may be obtained via a mobile application of one or more users (e.g., the energy suppliers and/or energy consumers) or may be obtained from electric meters (e.g., the electric meters 12 and/or other suitable electric meters) associated with the users.

Notifications of available energy may provide any suitable information concerning the energy supplier's available energy. Example information concerning the energy supplier's available energy may include, but is not limited to, a cost for the available energy, a time and/or duration at which the energy is or will be available, a location from which the energy is to be supplied (e.g., a location may be the location of the energy supplier, a renewable energy source, an EV charging station, an electric meter, etc.), a type of device providing the energy and/or through which the energy is available (e.g., EV charging station, EV, type of device, renewable energy source, battery, etc.), an amount of energy available, a quality of the energy available (e.g., a known quality based on past energy from the energy supplier, an expected quality, etc.), a rating of the energy supplier (e.g., a rating based on energy consumer reviews), whether a tariff, tax, and/or other government regulation applies to the trading of the supplier's energy, and/or other suitable parameters related to the supply of energy.

Requests for energy may include any suitable information concerning the energy consumer's energy needs. Example information concerning the energy consumer's energy needs include, but is not limited to, a price (e.g., a range of prices, a specified price, etc.) the energy consumer is willing to pay for energy, a time (e.g., a range of times, a specified time, etc.) at which energy is needed, a location (e.g., a specified location, a location within a distance of a specified location, etc.) at which energy is needed, a type of device that needs the requested energy (e.g., EV, a type of EV, battery, HVAC equipment, etc.), an amount of energy needed, and/or other suitable parameter for an energy transfer or trading transaction.

In the method 800, a selection from a first energy consumer of one or more of the energy suppliers may be received 806 to fulfill a request for energy of the first energy consumer. The notifications of available energy, requests for energy, and selection of suppliers to fulfill energy requests may be received in, stored at, and/or processed in a transaction manager (e.g., the transaction manager 52 and/or other suitable transaction manager).

In some cases, the selection of the first energy consumer may be done by a user through a mobile application (e.g., the energy share application 68 or other suitable mobile application), but this is not required. In one example, the mobile application may present available energy suppliers to an energy consumer and provide those energy suppliers in a map view, a dashboard view, a list view, or other suitable view. The view may be customizable by the user and may be account specific.

Although not required, the energy trading platform may suggest or recommend which energy supplier to select to best meet the energy consumer's needs. The suggestion or recommendation may be based on one or more factors including, but not limited to, energy quality, a quality requirement for the energy requested, a voltage and/or a current requirement of the requested energy, a quantity of available energy, a quantity of energy requested, energy price, relative price, energy location, energy supplier location relative to an energy consumer location, a requested time of delivery of the energy, supplier ratings, etc.

In response to receiving the selection of the one or more energy suppliers, a blockchain transaction may be created 808 in a blockchain distributed ledger of the energy trading platform between the first energy consumer and the selected one or more of the energy suppliers. In some cases, the transaction manager of the energy trading platform may create a self-executing smart contract that includes the details or parameters of a transaction between the energy consumer and energy supplier. Example details or parameters of the transaction may include, but are not limited to, tariffs, identifying information for the first energy consumer, identifying information for the selected one or more of the energy suppliers, a price for the energy request by the first energy consumer, a timing of the energy transfer, a location of the energy transfer (e.g., a location may be the location of the energy consumer and energy supplier, an EV charging station at a location of the energy supplier, a location of an electric meter, etc.), a type of device (e.g., EV charging station, EV, renewable energy source, battery, etc.) at which the electric meter is installed, an amount of energy the energy supplier can provide and/or is to provide, a time at which the energy is for sale, and/or other suitable parameter for an energy transfer or trading transaction.

In response to creating the transaction, the electric meter, via a blockchain client of the electric meter, may be instructed 810 to allow delivery of the energy requested by the first energy consumer to an energy load of the first energy consumer. In some cases, an electric meter associated with the energy supplier may provide the requested amount of electricity directly to an electric meter of the energy consumer or to the grid. The energy transfer may be initiated at the time of creating the transaction. Alternatively, or additionally, the energy trading platform and/or the self-executing smart contract associated with the transaction may cause the energy transaction to initiate or occur at a desired time when the desired time is specified in the transaction. Further, if a request for energy includes a required measure of quality, the energy trading platform may instruct the electric meter, via the blockchain client, to prevent and/or interrupted delivery of the requested energy when a measure of quality of the energy delivered is below the required quality level.

In one example transaction using the energy trading platform, a transaction may be created for the use of an EV charging station. In the example, the energy supplier may have an EV charging station that has times at which it is available for third party use and the energy consumer may have an EV with limited access to a local EV charging station. The energy supplier may post via the energy trading platform that its EV charging station is available for use at a particular time, along with other suitable details of the EV charging station. The energy consumer may review (e.g., via a mobile application) available EV charging stations nearby the energy consumer that are available for use during a desired time period for charging its EV and select a desirable energy supplier and EV charging station. In response, the energy trading platform may automatically create a transaction and smart contract between the energy supplier and energy consumer. Then, at a scheduled time for the energy transfer via the EV charging station, the energy consumer may connect its EV to the EV charging station and provide an indication that the EV is connected to the EV charging station via a mobile application of the energy trading system or via the EV charging station. In response to the connection and/or the indication, the energy may be automatically transferred to the EV and the energy consumer's financial account may be automatically debited for the cost of the energy received during the energy transfer.

In some cases, and in conjunction with the method 800, a dynamic demand response (DDR) manager (e.g., the DDR manager 56 or other suitable DDR manager) may be in communication with the transaction manager. When so configured, the DDR manager may identify an imbalance in energy supply and demand, and communicate a time of the expected or identified imbalance to the transaction manager. If one or more transactions are to occur that might affect the imbalance, the transaction manager may output a DR signal from the DDR manager to the electric meter of the energy consumer or energy supplier (e.g., the energy supplier includes an EV charging station and the electric meter is associated with the EV charging station) via the blockchain client of the electric (or instruct the DDR manager to output a DR signal to the electric meter) to curtail delivery of the energy requested by the energy consumer. Further, in such an instance, the transaction manager may delay the energy transfer, delay subsequent energy transfers, cancel the energy transfer, cancel subsequent energy transfers, and/or initiate other actions to address the energy imbalance and effect the imbalance may have on the energy trading system.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A peer-to-peer energy trading system, comprising:
an electric meter operatively couplable to an energy source and an energy load, the electric meter including:
a metrology unit for measuring a quantity of energy delivered from the energy source to the energy load;
an energy controller for controlling energy delivery between the energy source and the energy load;
a blockchain client;
an energy trading platform configured to establish a blockchain distributed ledger, the energy trading platform configured to:
receive notifications of available energy from one or more energy suppliers;
receive requests for energy from one or more energy consumers;
receive a selection from a first energy consumer of one or more of the energy suppliers to fulfill a request for energy of the first energy consumer;
create a blockchain transaction in the blockchain distributed ledger between the first energy consumer and the one or more of the energy suppliers selected by the first energy consumer to fulfill the request for energy of the first energy consumer, the blockchain transaction including a self-executing smart contract that identifies the first energy consumer, the one or more of the energy suppliers selected by the first energy consumer to fulfill the request for energy of the first energy consumer, and a price for the energy requested by the first energy consumer; and
instruct the electric meter via the blockchain client of the electric meter to allow delivery of the energy requested by the first energy consumer to an energy load of the first energy consumer.

2. The peer-to-peer energy trading system of claim 1, wherein the electric meter further comprises an energy quality unit for determining a measure of quality of energy delivered from the energy source to the energy load, and wherein the measure of quality of energy delivered from the energy source to the energy load is reported to the blockchain distributed ledger via the blockchain client of the electric meter.

3. The peer-to-peer energy trading system of claim 2, wherein the requests for energy from the first energy consumer includes a required quality level, and wherein the electric meter, via the energy controller, prevents and/or interrupts delivery of the energy requested by the first energy consumer to the energy load when the measure of quality of energy delivered from the energy source to the energy load is below the required quality level.

4. The peer-to-peer energy trading system of claim 2, wherein the measure of quality of energy includes a measure of one or more of sag, swell, interruptions, spikes, notches, oscillations, harmonics and flicker.

5. The peer-to-peer energy trading system of claim 1, wherein the energy trading platform is configured to receive demand response signals indicating energy demand is exceeding or expected to exceed energy supply, and in response, instruct the electric meter via the blockchain client of the electric meter to curtail delivery of the energy requested by the first energy consumer to the energy load of the first energy consumer.

6. The peer-to-peer energy trading system of claim 1, wherein the energy source is an electric grid, and one or more of the energy suppliers provide energy to the electric grid.

7. The peer-to-peer energy trading system of claim 1, wherein the one or more energy suppliers selected by the first energy consumer to fulfill the request for energy of the first energy consumer includes an Electric Vehicle (EV) charging station, and the electric meter is part of the EV charging station.

8. The peer-to-peer energy trading system of claim 7, wherein energy trading platform is configured to suggest to the first energy consumer which of the one or more of the energy suppliers to select to fulfill their request for energy of the first energy consumer.

9. The peer-to-peer energy trading system of claim 8, wherein the energy trading platform is configured to suggests to the first energy consumer which of the one or more of the energy suppliers to select to fulfill their request for energy of the first energy consumer based on one or more of a location of the first energy consumer relative to the one or more of the energy suppliers, a quantity of requested energy, a quality requirement for the requested energy, a voltage and/or a current requirement of the requested energy and a requested time of delivery of the requested energy.

10. The peer-to-peer energy trading system of claim 1, wherein the electric meter is configured to have a draw mode and a feed mode, wherein in the draw mode the electric meter is configured to deliver energy from the energy source down to a local energy load, and in the feed mode the electric meter is configured to deliver a feed energy from a local energy source up to the energy source, wherein the energy trading platform is configured to instruct the electric meter via the blockchain client of the electric meter to switch between the draw mode and the feed mode.

11. An electric meter comprising:
a metrology unit for measuring a quantity of energy delivered from the energy source to the energy load;
an energy quality unit for determining a measure of quality of energy delivered from the energy source to the energy load;
an energy controller for controlling energy delivery between the energy source and the energy load;
a communication port for interfacing with a mobile device for receiving one or more energy sale parameters from a user;
a blockchain client for communicating with a remote blockchain distributed ledger, wherein the blockchain client is configured to:
report the measure of quality of energy delivered from the energy source to the energy load to the remote blockchain distributed ledger;
report the one or more energy sale parameters to the remote blockchain distributed ledger; and
receive instructions from the remote blockchain distributed ledger to control the energy controller.

12. The electric meter of claim 11, wherein the one or more energy sale parameters include one or more of a Tariff, a location of the electric meter, a type of device at which the electric meter is installed, an amount of energy that is available for sale, and a time that the energy is available for sale.

13. The electric meter of claim 11, wherein the one or more energy sale parameters includes a required quality level, and wherein the electric meter, via the energy controller, prevents and/or interrupts delivery of the energy from the energy source to the energy load when the measure of quality of energy delivered from the energy source to the energy load is below the required quality level.

14. The electric meter of claim 11, wherein the measure of quality of energy includes a measure of one or more of sag, swell, interruptions, spikes, notches, oscillations, harmonics and flicker.

15. The electric meter of claim 11, further comprising:
a draw mode; and
a feed mode, and
wherein in the draw mode the electric meter is configured to deliver energy from the energy source down to a local energy load and in the feed mode the electric meter is configured to deliver a feed energy from a local energy source up to the energy source.
